# EUROPÄISCHE PATENTANMELDUNG

(11) **EP 0 978 658 A1**
(43) Veröffentlichungstag der Anmeldung: **09.02.2000**
(21) Anmeldenummer: 99890260.5
(22) Anmeldetag: 05.08.1999
(51) Int. Cl.: F04D 29/22, B29C 45/26

(54) **Radiallaufrad für eine Kreiselpumpe**

(30) Priorität: 06.08.1998 AT 135798
(71) Anmelder: TCG UNITECH Aktiengesellschaft, 4560 Kirchdorf/Krems (AT)
(72) Erfinder: Heer, Siegfried, Ing., 4560 Kirchdorf / Krems (AT)
(74) Vertreter: Babeluk, Michael, Dipl.-Ing. Mag., Patentanwälte Babeluk - Krause

(57) **Zusammenfassung**

Die Erfindung betrifft ein Radiallaufrad (1) für eine Kreiselpumpe mit mindestens einem Strömungskanal (5) zwischen einem axialen Strömungseintrittsbereich (6) und einem im wesentlichen radialen Strömungsaustrittsbereich (7), welcher Strömungskanal (5) durch die Innen- und Außenflächen (3, 4) mindestens einer Laufschaufel (2) und durch im wesentlichen, quer zur Achse (1a) des Radiallaufrades (1) verlaufende ringförmige, zueinander gerichtete und einstückig mit dem Radiallaufrad (1) ausgeführte erste und zweite Kanalflächen (8, 9) begrenzt ist. Um die Herstellung des Radiallaufrades (1) zu vereinfachen, ist vorgesehen, daß die Kanalflächen (8, 9) unterschiedliche Durchmesser aufweisen, wobei der kleinste Durchmesser (Dᵢ) der ersten Kanalfläche (8) mindestens dem größten Durchmesser (dₐ) der zweiten Kanalfläche (9) entspricht, wobei vorzugsweise die erste Kanalfläche (8) auf der Seite des Eintrittsbereiches (6) des Radiallaufrades (1) angeordnet ist.

## Beschreibung

Die Erfindung betrifft ein Radiallaufrad für eine Kreiselpumpe mit mindestens einem Strömungskanal zwischen einem axialen Strömungseintrittsbereich und einem im wesentlichen radialen Strömungsaustrittsbereich, welcher Strömungskanal durch die Innen- und Außenflächen mindestens einer Laufschaufel und durch im wesentlichen quer zur Achse des Radiallaufrades verlaufende ringförmige, zueinander gerichtete und einstückig mit dem Radiallaufrad ausgeführte erste und zweite Kanalflächen begrenzt ist.

Es ist bekannt, geschlossene Laufräder einteilig in einem Spritz- oder Gußvorgang herzustellen. Die Strömungskanäle werden dabei mittels radial angeordnete Schieber ausgeformt, welche nach der Formgebung radial entfernt werden. Pro Strömungskanal ist dabei ein Schieber erforderlich. Dies ist allerdings sehr werkzeug- und zeitaufwendig.

Aus der DE 23 09 635 A ist ein Lüfterrad für einen Wäschetrockner bekannt, bei dem die Schaufeln zur Versteifung von einem äußeren Ring gehalten werden. Dadurch wird eine leichte und dennoch robuste Ausführung erreicht, ohne die leichte Entformbarkeit zu beeinträchtigen. Es ist jedoch keine Kanalfläche im Sinn der Erfindung offenbart. In der GB 2 312 023 A ist ein zweiteiliges Laufrad beschrieben, bei dem es erforderlich ist, die Teile durch Kleben oder Schweißen zusammenzufügen. Ein solches Laufrad ist aufwendig in der Herstellung.

Aufgabe der Erfindung ist es, diese Nachteile zu vermeiden, und die Herstellung von Laufrädern zu vereinfachen.

Erfindungsgemäß erfolgt die Lösung der Aufgabe dadurch, daß die Kanalflächen unterschiedliche Durchmesser aufweisen, wobei der kleinste Durchmesser der ersten Kanalfläche geringfügig kleiner ist als der größte Durchmesser der zweiten Kanalfläche und wobei vorzugsweise die erste Kanalfläche auf der Seite des Eintrittsbereiches des Radiallaufrades angeordnet ist. Das Laufrad ist dabei auf der dem Eintrittsbereich abgewandten Rückseite halb offen ausgeführt. Das Formwerkzeug kann durch sehr einfach ausgeführt werden. Da auf diese Weise mehrere Formnester pro Werkzeug möglich sind, kann zudem auch die Produktivität erhöht werden.

Besonders vorteilhaft ist es, wenn das Radiallaufrad durch ein zweiteiliges Formwerkzeug herstellbar ist, dessen Formhälften zueinander axial zur Achse des Radiallaufrades bewegbar sind, wobei die erste Kanalflächc und Teile der zumindest einen Laufschaufel, die sich außerhalb des kleinsten Durchmessers der ersten Kanalfläche befinden, von einer ersten Formhälfte und die zweite Kanalfläche sowie Teile der zumindest einen Laufschaufel, die sich innerhalb des größten Durchmessers der zweiten Kanalfläche befinden, von einer zweiten Formhälfte erzeugbar sind. Die beiden Formhälften werden dabei vor dem Spritzvorgang in Richtung der Laufradachse geschlossen und nach dem Spritzvorgang in Richtung der Laufradachse geöffnet. Die Laufschaufeln werden somit nicht mehr durch radial bewegte Formschieber, sondern nur durch axial bewegte Formhälfte einer zweiteiligen Spritzform hergestellt.

Die Erfindung eignet sich besonders für Laufräder, die aus Kunststoff bestehen. Die Laufräder können aber auch aus metallischem oder keramischem Material bestehen.

Die Erfindung wird im Folgenden anhand der Figuren näher erläutert.

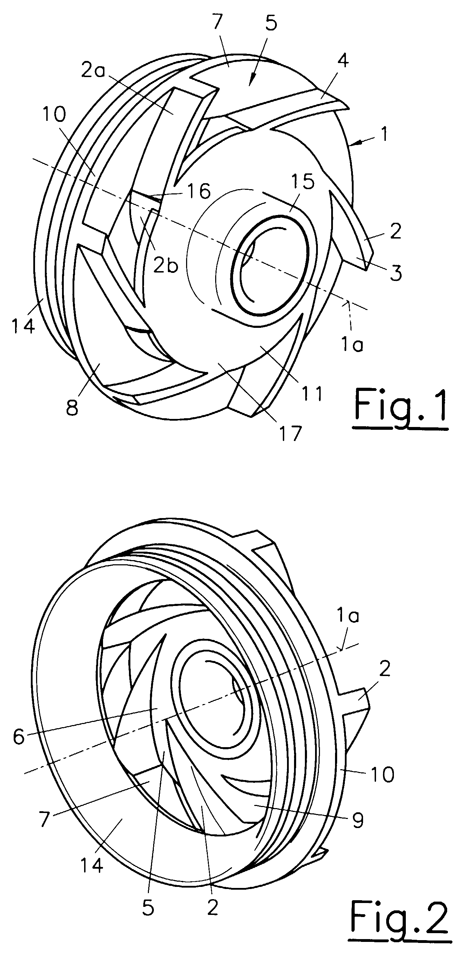

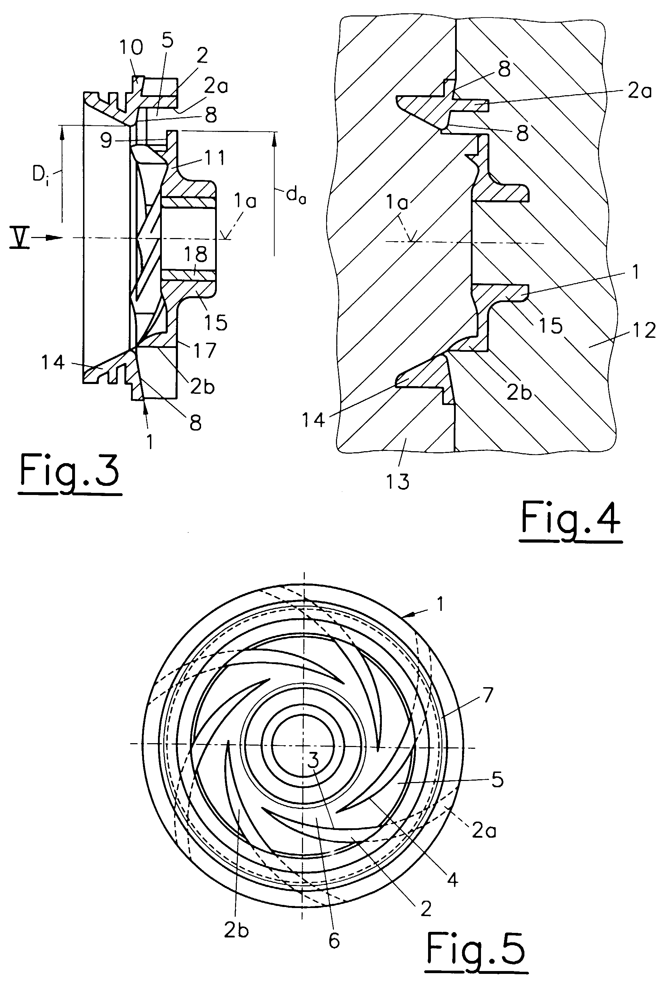

Es zeigen Fig. 1 und 2 Schrägansichten auf das erfindungsgemäße Laufrad, Fig. 3 einen Längsschnitt durch das erfindungsgemäße Laufrad, Fig. 4 einen Längsschnitt durch ein in einer Spritzform liegendes Axiallaufrad analog zu Fig. 3, Fig. 5 eine Draufsicht auf das Radiallaufrad gemäß dem Pfeil V in Fig. 3.

Das in den Fig. 1 bis 5 dargestellte Radiallaufrad 1 weist mehrere Laufschaufeln 2 auf. Die Innenfläche 3 und die Außenfläche 4 zweier benachbarter Laufschaufeln 2 definieren jeweils einen Strömungskanal 5, welcher sich von einem axialen Eintrittsbereich 6 nahe der Achse 1a des Laufrades 1 bis zu einem radialen bzw. tangentialen Austrittsbereich 7 erstreckt. Stirnseitig werden die Strömungskanäle 5 von ringförmigen ersten und zweiten Kanalflächen 8 und 9 begrenzt, welche von ersten und zweiten Wänden 10 und 11 des Radiallaufrades 1 gebildet werden. Die Kanalflächen 8 und 9 sind im wesentlichen normal zur Achse 1a des Radiallaufrades 1 ausgebildet oder nur geringfügig zu einer Normalebene auf die Achse 1a geneigt. Mit Bezugszeichen 18 ist die Lagerung des Radiallaufrades 1 bezeichnet.

Die erste Kanalfläche 8 und die zweite Kanalfläche 9 sind an gegenüberliegenden Seiten der Strömungskanäle 5 angeordnet. Der kleinste Durchmesser Dᵢ ist mindestens so groß ausgebildet, wie der größte Durchmesser dₐ der zweiten Kanalfläche 9. Dadurch ist es möglich, das Laufrad 1 mit zwei Formhälften 12 und 13 herzustellen, welche gegeneinander in Richtung der Achse 1a verschiebbar sind.

Wie aus Fig. 4 hervorgeht, werden dabei die erste Kanalfläche 8 sowie Teile 2a der Laufschaufeln 2, die außerhalb des Durchmessers Dᵢ liegen, sowie die Laufradnabe 14 durch die erste Formhälfte 12 geformt. Die zweite Kanalfläche 9 sowie Teile 2b der Laufschaufeln, welche innerhalb des Durchmessers dₐ liegen, werden hingegen durch die zweite Formhälfte 13 geformt, welche sich auf der Seite des Einlaufes 14 des Radiallaufrades 1 befindet. Die Struktur des Zulaufbereiches 14 wird dabei ebenfalls durch die zweite Formhälfte 13 gebildet. Die Nabe 15 hingegen des Radiallaufrades 1 wird im wesentlichen durch die erste Formhälfte 12 definiert.

Im Bereich des Innendurchmessers Dᵢ bzw. Außendurchmessers dₐ kann sich dabei ein kleiner Gußgrad 16 an den Laufschaufeln 2 ausbilden, wie dies in Fig. 1 dargestellt ist. Durch geeignete Formgebung der Formhälften 12, 13 läßt sich der Gußgrad 16 auf ein Mindestmaß beschränken, so daß sich auch ohne Nachbearbeitung keine wesentlichen Nachteile auf die Strömung ergeben.

Wie weiters aus Fig. 1 ersichtlich ist, ist die Rückseite 17 des Radiallaufrades 1 halb offen ausgeführt, so daß die äußeren Teile 2a der Laufschaufeln 2 mit der ersten Formhälfte 12 ausgeformt werden kann. Das aus den beiden Formhälften 12, 13 bestehende Formwerkzeug ist äußerst einfach und hat überdies den Vorteil, daß mehrere Formnester in einem Formwerkzeug untergebracht werden können, was die Produktivität der Herstellung wesentlich erhöht.

## Patentansprüche

1. Radiallaufrad (1) für eine Kreiselpumpe mit mindestens einem Strömungskanal (5) zwischen einem axialen Strömungseintrittsbereich (6) und einem im wesentlichen radialen Strömungsaustrittsbereich (7), welcher Strömungskanal (5) durch die Innen- und Außenflächen (3, 4) mindestens einer Laufschaufel (2) und durch im wesentlichen quer zur Achse (1a) des Radiallaufrades (1) verlaufende ringförmige, zueinander gerichtete und einstückig mit dem Radiallaufrad (1) ausgeführte erste und zweite Kanalflächen (8, 9) begrenzt ist, **dadurch gekennzeichnet,** daß die Kanalflächen (8, 9) unterschiedliche Durchmesser aufweisen, wobei der kleinste Durchmesser (D) der ersten Kanalfläche (8) geringfügig kleiner ist als der größte Durchmesser (dₐ) der zweiten Kanalfläche (9), und wobei vorzugsweise die erste Kanalfläche (8) auf der Seite des Eintrittsbereiches (6) des Radiallaufrades (1) angeordnet ist.

2. Radiallaufrad (1) nach Anspruch 1, **dadurch gekennzeichnet,** daß das Radiallaufrad (1) durch ein zweiteiliges Formwerkzeug herstellbar ist, dessen Formhälften (12, 13) zueinander axial zur Achse (1a) des Radiallaufrades (1) bewegbar sind, wobei die erste Kanalfläche (8) und Teile (2a) der zumindest einen Laufschaufel (2), die sich außerhalb des kleinsten Durchmessers (Dᵢ) der ersten Kanalfläche (8) befinden, von einer ersten Formhälfte (12), und die zweite Kanalfläche (9) sowie Teile (2b) der zumindest einen Laufschaufel (2), die sich innerhalb des größten Durchmessers (dₐ) der zweiten Kanalfläche (9) befinden, von einer zweiten Formhälfte (13) erzeugbar sind.

3. Radiallaufrad (1) nach Anspruch 1 oder 2, **dadurch gekennzeichnet,** daß das Radiallaufrad (1) auf der dem Eintrittsbereich (6) abgewandten Rückseite (17) halboffen ausgeführt ist.

4. Radiallaufrad (1) nach einem der Ansprüche 1 bis 3, **dadurch gekennzeichnet,** daß das Radiallaufrad (1) aus Kunststoff besteht und in einem Spritzvorgang herstellbar ist.

5. Verfahren zur Herstellung eines Radiallaufrades (1) nach einem der Ansprüche 1 bis 4 in einem Spritzvorgang, dadurch gekennzeichnet, daß das Radiallaufrad (1) durch ein zweiteiliges Formwerkzeug hergestellt wird, dessen beide Formhälften (12, 13) vor dem Spritzvorgang in Richtung der Achse (1a) des Radiallaufrades (1a) geschlossen und nach dem Spritzvorgang in Richtung der Achse (1a) des Radiallaufrades (1) geöffnet werden, wobei die erste Kanalfläche (8) und Teile (2a) der zumindest einen Laufschaufel (2), die sich außerhalb des kleinsten Durchmessers (Dᵢ) der ersten Kanalfläche (8) befinden, von der ersten Formhälfte (12), und die zweite Kanalfläche (9) sowie Teile (2b) der zumindest einen Laufschaufel (2), die sich innerhalb des größten Durchmessers (dₐ) der zweiten Kanalfläche (9) befinden, von der zweiten Formhälfte geformt (13) werden.
